Europäisches Patentamt

**European Patent Office**

Office européen des brevets

(11) Publication number: **0 341 031**
**A2**

# EUROPEAN PATENT APPLICATION

(21) Application number: **89304422.2**

(22) Date of filing: **03.05.89**

(51) Int. Cl.⁴: **F 16 K 31/122**
**F 16 K 41/10**

(30) Priority: **04.05.88 US 190004**

(43) Date of publication of application:
**08.11.89 Bulletin 89/45**

(84) Designated Contracting States: **BE DE FR GB NL**

(71) Applicant: **NUPRO COMPANY**
**4800 East 345 Street**
**Willoughby Ohio 44094 (US)**

(72) Inventor: **Danko, Oliver**
**12184 Heath Road**
**Chesterland Ohio 44026 (US)**

(74) Representative: **Jones, Colin et al**
**W.P. THOMPSON & CO. Coopers Building Church Street**
**Liverpool L1 3AB (GB)**

(54) **Valve actuator.**

(57) A fluid operated valve acuator which can be used for either a normally-open valve or a normally-closed valve includes a housing body (10) having a cylindrical side wall (12) and an apertured end wall (19) integral therewith and defining a substantially cylindrically-shaped cavity therein. An end cap (30) is selectively securable to the cylindrical housing side wall (12) to enclose the cavity and form a chamber. The end cap (30) has a substantially centrally located port (41) extending therethrough which communicates with the chamber. A bonnet (50) extends into the housing body (10) through the apertured end wall (14) thereof. The bonnet (50) has a longitudinally extending bore (74) which communicates with the housing body chamber. A retainer (58) holds the body (10) on the bonnet (50). A valve stem (80) extends through the bonnet bore (74) and the end wall aperture and terminates in the housing chamber. A piston (90) is located in the chamber and is secured to the valve stem. A resilient member is provided for biasing the piston to one end position. The resilient member is either a spring (160) located in the chamber or a spring (130) located in the bonnet bore (74). Fluid flow is introduced to one side of the piston for selectively causing the piston to move linearly against the bias of the spring (130 or 160) and shift the valve stem (80).

FIG. 1

## Description

## VALVE ACTUATOR

This invention relates to valves. More specifically, the present invention relates to a fluid-operated actuator for a valve.

The invention is particularly applicable to a fluid-operated valve actuator which can be used for either normally-open or normally-closed valves with a minimum of modification. However, the invention has broader applications and may also be useful, for example, in an actuator for a double-acting valve.

Shut-off valves that are provided with an actuator which is remotely controlled, such as a pneumatic or hydraulic actuator, are well known in the art. Supplying a pressurized fluid, such as compressed air, to the operator lifts a valve stem off a valve seat to open the valve. When the pressurized fluid is vented, the valve stem is automatically lowered by the biassing force of a coil spring to close the valve.

Air actuators for normally-open valves and double-acting valves are also known. However, a fluid-operated actuator which can readily be utilized for any of these three applications is not currently available. In other words, different housings for valve actuators are currently needed for normally-open, normally-closed and double-acting valves.

Since each of these three general classifications of valves is manufactured in a number of different valve sizes, the manufacturer of automatic valves must design and supply a large number of different actuators in order to offer a complete line of valves for its customers. This is obviously disadvantageous from a manufacturer's point of view. It is also undesirable from the standpoint of the valve user who may have an installation requiring a number of different types and sizes of automatic valves and must therefore stock repair parts for many different actuators and valves.

Also, a need has recently arisen for small sized valve actuators in the semi-conductor industry. In this environment, a plurality of closely spaced valves needs to be used in a ganged configuration to control the flow of fluids. However, at present, the conventional valve actuators available are considerably larger in diameter than the valves themselves so that the actuators limit the spacing of the valves from each other.

One type of a reversible actuator for automatic valves is known to the art. In this actuator, a cup-shaped piston can be positioned with its open end facing either end wall of a housing member of the actuator so that it can be used for either normally-open or normally-closed valves. However, this type of actuator has not found commercial success.

In the field of bellows-sealed valves, such as are generally used in the semi-conductor industry, different actuators are currently used for normally-open, normally-closed and double-acting valves. Also most valve actuator housings are not small enough to be able to fit in confined quarters and several cannot be rotated as needed to position an inlet or outlet port in a preselected position.

Therefore, a small rotatable actuator which is capable of being used with only minor modifications on either normally-closed or normally-open valves, as well as on double-acting valves, is still needed.

Accordingly, it has been considered desirable to develop a new and improved valve actuator which would overcome the foregoing difficulties and others and meet the above stated needs while providing better and more advantageous overall results.

In accordance with the present invention, a new and improved fluid-operated valve actuator is provided which can be used for either normally-open or normally-closed valves.

More particularly in accordance with the invention, the actuator comprises a housing body comprising a cylindrical side wall and an apertured end wall integral therewith and defining a cavity therein. An end cap is selectively securable to the cylindrical side wall of the housing in order to enclose the cavity and form a chamber. The end cap has a substantially centrally located first port which extends there through and communicates with the chamber. A bonnet extends into the housing body through the apertured end wall thereof. The bonnet has a longitudinally extending bore which communicates with the chamber in the housing body. A retaining means holds the body on the bonnet. A valve operating rod extends through the bonnet bore and terminates in the chamber in the housing body. A piston is located in the chamber and is secured to the valve operating rod. Resilient means are provided for bias sing the piston to one end position. The resilient means is located in the chamber or in the bonnet bore. A means for introducing a fluid flow to one side of the piston is provided for selectively causing the piston to move linearly against the bias of the resilient means and shift the valve stem.

In accordance with another aspect of the invention, the resilient means comprises a spring located in the chamber. The spring engages, by a first end, an end wall of the chamber and, by a second end, one face of the piston. Alternatively, the resilient means comprises a spring located in the bonnet bore. The spring engages, by a first end, an inwardly extending shoulder of the bonnet and, by a second end, a snap ring held in a groove located on an outer periphery of the valve operating rod.

In accordance with still another aspect of the invention, the retaining means comprises a snap ring which fits in a groove located in an outer periphery of the bonnet. The actuator further comprises a spacer ring which is held on an inner shoulder of the housing end wall and is located adjacent the snap ring. A seal is located in a groove in the housing end wall and surrounds the bonnet adjacent the spacer ring.

According to yet another aspect of the invention, the first port includes a threaded portion.

In accordance with a further aspect of the invention, the end cap comprises an end face, a stem extending normal to the end face and having a threaded portion and a groove located on the stem between the threaded portion of the stem and the end face. Preferably, a seal body is selectively positionable in the groove of the end cap.

In accordance with a still further aspect of the invention, an outer periphery of the valve operating rod has a first groove and, spaced therefrom, a second groove. The actuator further comprises a first seal body positioned in the first groove for sealing against an adjoining surface of the piston and a second seal body positioned in the second groove for sealing against an adjoining surface of the bonnet.

In accordance with a yet further aspect of the invention, the actuator further comprises a second port extending through a side wall of the housing body and communicating with the chamber.

According to a further aspect of the invention, a valve is provided.

More particularly in accordance with this aspect of the invention, the valve comprises a valve body having a valve chamber and a valve seat therein as well as a bonnet secured to the valve body and having a longitudinal passageway extending therethrough which is in communication with the valve chamber. A stem extends in the valve chamber and the bonnet passageway and is positioned for longitudinal movement therein. An actuator housing body comprising a side wall and an end wall integral therewith and defining a substantially cylindrically shaped cavity therein is also provided. The housing body has a first port extending through the side wall thereof adjacent the end wall for communicating with a cavity. A retaining means is provided for holding the housing body on the bonnet in a rotatable manner to permit selective radial positioning of the first port. An end cap is selectively fastenable to the cylindrical side wall of the housing in order to close the cavity in the housing body and form a chamber in the housing body. The end cap has a second port extending therethrough and communicating with the chamber. A piston is located in the chamber and is secured to the stem. A first connecting means is provided for connecting an associated conduit to the housing so as to communicate with the chamber through the first port. A second connecting means is provided for connecting an associated conduit to the housing so as to communicate with the chamber through the second port. A resilient means is provided for biassing the piston in one direction wherein a fluid flow through the first or the second port into the chamber on one side of the piston selectively causes the piston to move in a direction opposed to the one direction in which the piston is biassed by the resilient means.

According to a still further aspect of the invention, a fluid-operated valve actuator is provided which can be used in confined areas and which can be readily adapted for use with either normally open or normally closed valves.

More particularly, this aspect of the invention comprises a housing body having a side wall and an apertured end wall and defining a cavity therein. An end cap is selectively securable to the side wall of the housing in order to enclose the cavity and form a chamber. A bonnet having a longitudinal bore extending between first and second ends is also provided. The first end of the bonnet extends into the housing body through the end wall. A retaining means is provided for holding the body on the bonnet. A bonnet nut is provided for securing the second end of the bonnet to an associated valve body. A valve operating rod extends through the bonnet bore and terminates in the chamber in the housing body. A piston is located in the chamber and is secured to the valve operating rod. The housing body has a diameter which is no larger than a diameter of the bonnet nut.

One advantage of the present invention is the provision of a new and improved fluid-operated valve actuator.

Another advantage of the invention is the provision of a fluid-operated valve actuator which can be used for either normally-open or normally-closed valves as well as double-acting valves with only minor modifications.

Still another advantage of the present invention is the provision of a valve actuator housing for normally-open or normally-closed valves which has two threaded ports, each offering access to a respective side of a piston held in the housing.

Yet another advantage of the invention is the provision of a small sized valve actuator housing which can fit in confined spaces and which can therefore be used in a ganged valve configuration such as is employed, for example, in the semi-conductor industry.

A yet further advantage of the invention is the provision of a valve actuator body which can be swivelled through 360° for easy connection of a port on the actuator body with fluid inlets or outlets.

The invention will be further described, by way of example, with reference to the accompanying drawings, wherein:

Fig.1 is a side elevational view in section of a normally-closed valve utilizing the valve actuator of the present invention; and

Fig.2 is a side elevational view in cross-section of a normally-open valve utilizing the valve actuator of the present invention.

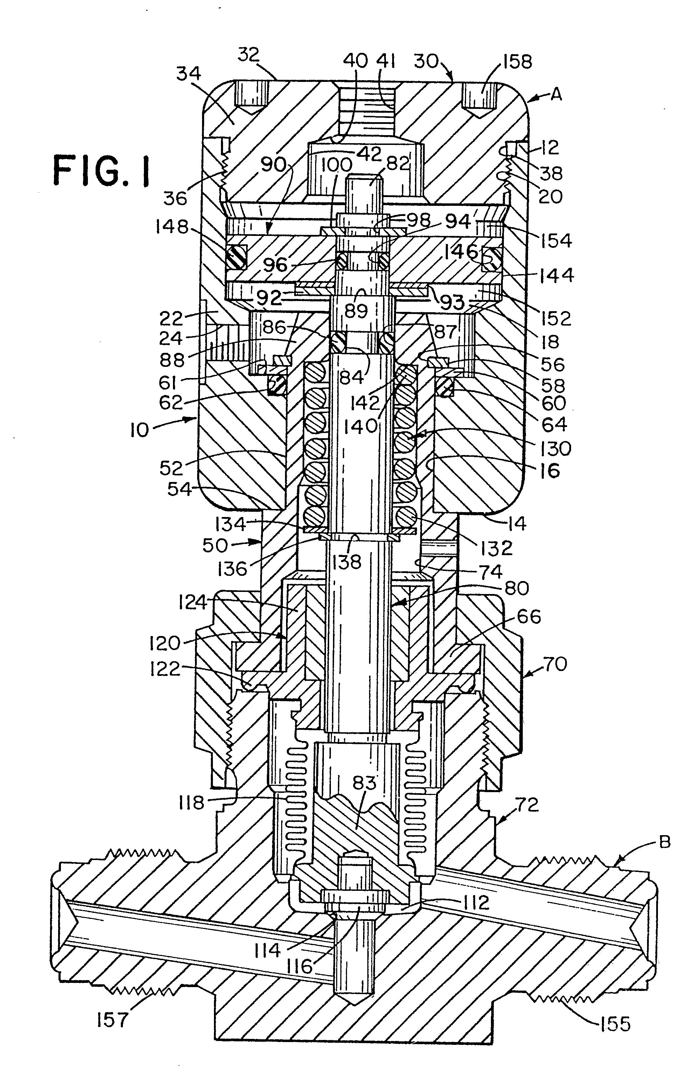

Referring now to Fig.1 of the drawings, a valve actuator A is shown in use on a normally-closed bellows valve B. Bellows type valves are used for controlling the flow of fluid, such as a corrosive, toxic, or expensive liquid or gas through a piping system in which the valve is operable to provide a leak-proof shut-off in the piping system. While the fluid-operated valve actuator will be described for use in connection with normally-open and normally-closed bellows valves, the overall inventive concept can be used for valves other than bellows valves and can be used not only for normally-open and normally-closed valves but also for double-acting valves.

The valve actuator A includes a housing body 10 that comprises a cylindrical side wall 12 and a thickened end wall 14 integral therewith. A bore 16 extends through the end wall and terminates in a cavity 18 which is formed within the cylindrical side wall. Adjacent an open end of the cavity 18 is provided a threaded section 20 on the inner periphery of the cylindrical side wall.

The side wall 12 of the housing body has a thickened side wall section 22 adjacent the end wall 14. A threaded bore 24 extends through the thickened side wall section 22 so as to communicate with the cavity 18 formed within the housing body 10. The thread in the bore 24 serves as a connecting means to accommodate the threaded end of a first suitable conventional tube or conduit (not illustrated) for communicating a pressurized fluid with the cavity 18, as is well known in the art.

An end cap 30 is selectively securable to the housing body 10 in order to enclose the cavity 18 and form a chamber. The end cap 30 comprises an end face 32, and a stem or spigot 34 extending normal to the end face and having a threaded section 36 thereon. Positioned on the spigot 34, between the threaded section 36 and the end face 32 is an annular groove 38. A bore 40 extends through the end cap 30 and includes a threaded section 41 and a larger diameter unthreaded section 42. The bore threaded section 41 serves as a connecting means to accommodate the threaded end of a second suitable conventional tube or conduit (not illustrated) for communicating a pressurized fluid with the chamber, as is well known in the art.

A bonnet 50 extends through the bore 16 in the end wall 14 of the housing body 10 and terminates in the chamber. The bonnet has an outer periphery 52 having thereon a shoulder 54 on which the housing body 10 is seated. A groove 56 is located in the outer periphery 52 of the bonnet adjacent a first end of the bonnet. Co-operating with the groove 56 is a retaining ring (snap ring) 58 for holding the housing body 10 on the bonnet 50 in a rotatable manner. Located below the retaining ring 58 is a spacer ring 60 which contacts an inner face 61 of the housing body end wall 14. In the end wall 14 is a groove 62 which holds a seal 64, such as an O-ring, for sealing between the bonnet and the housing body adjacent to the retaining ring 58 and the spacer 60. A flange 66 is provided on a second end of the bonnet 50 for co-operating with a bonnet nut 70 that holds the bonnet on a valve body 72. A longitudinally oriented bore 74 extends through the bonnet for accommodating a valve stem 80.

A first groove 84 is provided near a first end 82 of the valve stem 80 for accommodating a seal 86 that seals against an inner wall 87 provided on an inwardly extending thickened section 88 of the bonnet 50 located at the first end 82 of the bonnet 50. A shoulder 89 is provided on the stem 80 in a spaced manner from the groove 84 for holding a disc-like toroidally shaped piston 90. A washer 92 is interposed between the shoulder 89 and the piston 90 along with a curved spring washer 93. Spaced from the shoulder 88 on the stem is a second groove 94 which accommodates a seal member 96, such as an O-ring, for sealing against an inner bore wall of the piston 90. Spaced from the second groove 94 of the stem is a third groove 98 which co-operates with a retaining ring 100 for holding the piston in place on the stem against the shoulder 89.

The housing body 10 is rotatably secured to the bonnet 50 by retaining ring 58 and the spacer 60 to allow selective positioning of the lower port 24 in a preselected orientation around the valve body 72. In other words, the air operator A is so mounted on the valve bonnet 50 that the housing body 10 can be rotated to accommodate the connection of a suitable conventional fluid supply line (not illustrated) to the threaded bore 24.

With reference now again to the valve body 72, it includes a valve chamber 112 having therein a valve seat 114 which co-operates with a stem insert 116 held on a second end 83 of the stem 80. Also, secured to the second end 83 of the stem is one end of a bellows 118, the other end of which is secured to a ring 120 which encircles a portion of the stem 80. A flange 122 on the ring 120 extends radially outwardly adjacent the bonnet flange 66. The bonnet nut 70 therefore holds the bonnet flange 66 and the flange 122 of the ring 120 on the valve body 72. Also, a bead seal is formed by a section of the ring flange 122 against an upper end of the valve body 72. A bushing 124 encircles a portion of the stem 80 within the ring 120.

A spring 130 is positioned around the stem 80 at a section of the stem which extends within the bonnet 50. A first end 132 of the spring is held in place by a washer 134 which is mounted on a retaining ring (snap ring) 136 held in a groove 138 in the stem 80. A second end 140 of the spring abuts against a downwardly facing shoulder 142 of the thickened section 88 of the bonnet.

As mentioned, the piston 90 is substantially disc-like and has in an outer periphery 144 thereof a groove 146 which accommodates a suitable seal member 148, such as an O-ring, for sealing against the side wall of the chambers in the body. Therefore, the chamber in the housing body is divided by the piston and its seals 96 and 148 into a first section 152 located below the piston and a second section 154 located above the piston.

In the embodiment of Fig.1, the valve stem 80 is normally maintained in a closed position, as is illustrated in Fig.1, by the action of the compression coil spring 130 mounted on the stem 80. Thus, with this arrangement, the spring 130 is compressed between the washer 134 and the bonnet shoulder 142 to normally exert a downward force on the stem 80 to maintain the stem insert 116 in sealing engagement with the valve seat 114 in the absence of fluid pressure acting on the lower face of the piston 90.

In operation, to open the valve so that the stem insert 116 is lifted from the valve seat 114, fluid pressure is admitted into the first chamber section 152 through the threaded bore 24 which serves as an inlet port for the normally-closed valve. Pressurizing the first chamber section 152 exerts an upward force on the piston 90 overcoming the downward force exerted on the valve stem 80 by the spring 130. This compresses the spring 130 between the washer 134 and the bonnet shoulder 142 and opens the valve. Accordingly, releasing fluid from the first chamber section 152 reduces the upward pressure exerted on the piston 90 and, when the force of the spring 130 exceeds the fluid pressure exerted on the piston, the stem 80 will move downwardly and close the valve, as shown in Fig.1. Thus, the valve can be operated to either the fully-open or the fully-closed position.

The provision of the threaded bore 41 in the end cap 30 is advantageous even for a normally-closed valve, such as is illustrated in Fig.1, when cleanliness is critical. For such purposes, the bore 41 can be connected to a suitable hose (not illustrated) and used as a "pipe away" vent.

The air actuator of the illustrated embodiment of the present invention is also considerably more compact in terms of diameter than conventional air actuators, since the normally necessary turret has been eliminated and the entire housing of the air actuator can now swivel around the bonnet. More specifically, the diameter of the housing body 10 is designed to be no larger than the diameter of the bonnet nut 70 because this ensures the compact size of the air actuator. As previously mentioned, in the semi-conductor industry, a plurality of closely spaced valves is used in a ganged configuration and for such valves the diameter of the housing of the valve actuator has been a limiting factor in how closely spaced the valves can be. In this environment, when closely spaced valves are utilized, the threaded inlet and outlet ends 155 and 157 of the valve body 72 would be eliminated so that the limiting factor in the spacing of the valves would be the size of the bonnet nut and the size of the housing of the valve actuator.

Enough force can be obtained from the smaller sized piston 90 provided in the compact actuator described herein when it is subjected to laboratory air (at approximately 30 to 40 psi, 3 to 3.67 bar) for actuating the piston against the force of the spring 130, because the spring is located on the stem 80, and this reduces the force needed to move the stem. Also, such a location of the spring eliminates some of the friction normally encountered on a compression of a conventionally located spring by the movement of the stem.

A pair of apertures 158 is provided in the end cap 30, one on either side of the central bore 40 therein. These apertures 158 are adapted to co-operate with a suitable conventional spanner wrench in order to thread the end cap into the housing body along the co-operating threaded surfaces 20, 36. Threading the cap 30 into the body 10 is also advantageous from the standpoint of reducing the diameter of the housing since an allowance no longer needs to be made in the thickness of the body side wall 12 to accommodate the fasteners that conventionally secure the end cap to the body.

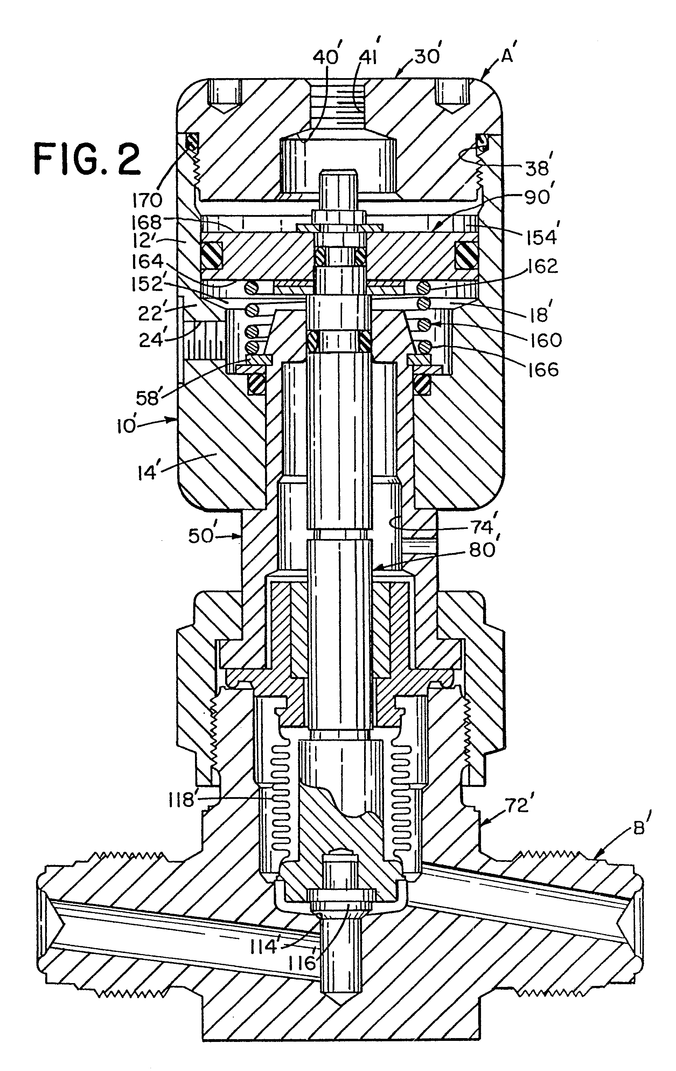

With reference now to Fig.2, the invention is there shown as being used with a normally-open diaphragm or bellows valve. For ease of illustration and appreciation of this embodiment, like components are identified by like numerals with a primed suffix and new components are identified by new numerals.

In this embodiment an air actuator A' is provided on a valve B'. The air actuator has a housing body 10' including a side wall 12' and a thickened end wall 14' and having therein a cavity 18' which is closed by an end cap 30' to form a chamber. The housing body is held in a rotatable manner on a bonnet 50' with the bonnet in turn being secured to a valve body 72'. A stem 80' extends through a longitudinal bore 74' in the bonnet so that an end of the stem is located in the chamber formed in the housing body 10'. The other end of the stem has secured thereto one end of a bellows 118'. A piston 90' is mounted on the stem for reciprocation and divides the chamber into a first section 152' and a second section 154' In this embodiment, the valve B' is of the normally-open type and therefore a stem insert 116' is normally urged away from a valve seat 114'. This is accomplished by a spring 160 which is located in the first chamber section 152'. A first end 162 of the spring abuts a lower face 164 of the piston 90'. A second end 166 of the spring abuts a snap ring 58' that is located adjacent a top face of the end wall 14' and holds the housing body on the bonnet 50'.

As mentioned, the valve stem 80' is normally maintained in an open position by the action of the compression coil spring 160 which exerts an upward force on the piston 90' and hence on the stem 80'. The upward force on the stem translates into an upward force on the stem insert 116' lifting the stem insert away from the valve seat 114'. However, in Fig.2, suitable fluid pressure has been brought to bear on an upper face 168 of the piston 90', by supplying pressurized fluid through a bore 40' in the end cap 30' and into the second chamber section 154', to overcome the force of the spring 160 and bring the stem insert 116' into contact with the valve seat 114'. With this arrangement, the spring 160 is compressed between the piston 90' and the end wall 14' of the housing body to exert an upward force on the stem 80' to normally maintain the stem insert 116' away from the valve seat 114' in the absence of sufficient fluid pressure in the second chamber section 154'.

Positioned in a groove section 38' of the end cap 30' is a seal member 170, such as an O-ring seal. This seal will ensure that pressurized fluid in the second chamber section 150' does not leak out between the end cap 30' and the housing side wall 12' but instead will be held in the second chamber section 154' between the end cap 30' and the piston 90'.

In operation, to close the valve so that the stem insert 116' comes into contact with the valve seat 114', as shown in Fig.2, fluid under pressure is admitted into the second chamber section 154' through the bore 40', which has a threaded section 41' in the end cap 30'. Pressurizing the second chamber section 154' exerts a downward force on the piston 90', overcoming the upward force exerted on the piston by the spring 160. This compresses the spring 160 between the piston and the end wall 14' of the housing body. Upon a release of fluid from the second chamber section 154', the downward pressure on the piston is reduced and, when the force of the spring 160 exceeds the fluid pressure exerted on the piston 90', the stem 80' will move in an upward direction to open the valve. Thus, the valve B' is operable between the fully opened and the fully closed positions.

The provision of a threaded bore 24′ in a thickened portion 22′ of the side wall section 12′ of the housing body is advantageous even for a normally-open valve, such as is illustrated in Fig.2, when cleanliness is critical. For such purposes, the bore 24′ can be connected to a suitable hose (not illustrated) and used as a "pipe away" vent.

It has been determined that an adequate amount of force can be obtained from the piston 90′ by the use of suitable conventional laboratory air (at 30 to 40 psi, 3 to 3.67 bar) acting on the second piston surface 168 against the strength of the spring 160 to actuate the valve into the closed configuration, as is illustrated in Fig.2.

Therefore, with a few simple adjustments, the valve actuator can be changed for use in either a normally-open or a normally-closed valve. More specifically, the removal of the spring 130 in the embodiment of Fig.1 together with its attendant washer 132 and retaining ring 134, and the positioning of the spring 160 and the O-ring 170 in the actuator A as is shown in Fig.2 will convert the valve actuator from use with a normally-closed valve to use with a normally-open valve.

Also, since two threaded connections are provided on the housing body 10, namely the threaded bore 24 in the housing side wall and the threaded bore 41 on the end cap 30, the air actuator A can, if desired, also be used without any springs as a double-acting actuator. In each case, a 360° swivel type air inlet or outlet connection 24 is provided for ease of installation.

## Claims

1. A fluid-operated valve actuator comprising a housing which defines a chamber, a piston (90) slidable in the chamber and a valve stem (80) secured to the piston (90), such that a fluid pressure applied across the piston (90) displaces the piston (90), and thereby the valve stem (80), possibly against the force of resilient means (130 or 160), characterised in that the housing comprises a housing body (10) having a side wall (12) and an apertured end wall (14) integral therewith, and an end cap (30) selectively securable to the side wall (12) and having a port (40) therein communicating with the chamber section at one side of the piston (90), and in that a bonnet (50) extends into the housing body (10) through its apertured end wall (14), and a retaining means (58) holds the housing body (10) on the bonnet (50), the valve stem extending from the piston (90) through a longitudinal bore (74) in the bonnet (50), the resilient means (130 or 160), when provided, being located in said chamber or in said bonnet bore (74), whereby the valve actuator can be used in a normally-open valve or in a normally-closed valve.

2. An actuator as claimed in claim 1, wherein said resilient means comprises a spring (160) located in said chamber and engaging, by one end (166) the end wall (14′) of said chamber, and, by the other end (162), one face (164) of said piston (90′).

3. An actuator as claimed in claim 1, wherein said resilient means comprises a spring (130) located in said bonnet bore (74) and engaging, by one end (140), an inwardly extending shoulder (142) of said bonnet (50) and, by its other end (132), a snap ring (136) held in a groove (138) located on an outer periphery of said valve stem (80).

4. An actuator as claimed in claim 1, 2 or 3, wherein said retaining means comprises a snap ring (58) which fits in a groove (56) located in the outer periphery of said bonnet (50) and wherein a spacer ring (60) is held on an inner shoulder of said housing end wall (14) and is located adjacent said snap ring (58); and a seal (64) is located in a groove (62) in said housing end wall (14) and surrounds said bonnet (50) adjacent said spacer ring (60).

5. An actuator as claimed in any of claims 1 to 4, wherein said end cap (30) includes a spigot (34) extending normal to an end face (32) of the end cap (30) and having a threaded portion (36) and a groove (38) is located on said spigot (34) between said threaded portion (36) and said end face (32).

6. An actuator as claimed in claim 5, wherein a seal member (170) is selectively positionable in said end cap groove (38′).

7. An actuator as claimed in any of claims 1 to 6, wherein said port (40) includes a threaded portion (41).

8. An actuator as claimed in any of claims 1 to 7, wherein an outer periphery of said valve stem (80) has a first groove (84) and, spaced therefrom a second groove (94), the actuator further comprising a first seal (86), positioned in said first groove (84), for sealing against an adjoining surface of said bonnet (50) and a second seal (96), positioned in said second groove (94), for sealing against an adjoining surface of said piston (90).

9. An actuator as claimed in any of claims 1 to 9, wherein a second port (24) extends through the side wall (12) of said housing body (10) and communicates with said chamber.

10. A valve comprising:
a valve body (72) having a valve chamber and a valve seat therein;
a bonnet (50) secured to said valve body and having a longitudinal passageway extending therethrough which is in communication with said valve chamber;
a stem (80) extending in said valve chamber and said bonnet passageway and positioned for longitudinal movement therein;
an actuator having a housing body (10) comprising a side wall (12) and an end wall (14) integral therewith and defining a substantially cylindrically-shaped cavity therein, said housing body (10) having a port (24) extending through said side wall (12) adjacent said end wall (14) for communicating with said cavity;

a retaining means (58) for holding said housing body (10) on said bonnet (50) in a rotatable manner to permit selective radial positioning of said port (24);

an end cap (30) selectively fastenable to said cylindrical side wall (12) to close said housing body cavity and form a chamber in said housing body (10), said end cap (30) having a port (40) extending therethrough and communicating with said chamber;

a piston (90) located in said chamber and secured to said stem (80);

a first connecting means for connecting an associated conduit to said housing so as to communicate with said chamber through the first-mentioned port (24);

a second connecting means for connecting an associated conduit to said end cap (30) so as to communicate with said chamber through the second port (41); and

a resilient means (130,160) for biassing said piston (90) in one direction, wherein a fluid flow through one of said ports (24,41) into said chamber on one side of said piston (90) selectively causes said piston to move in a direction opposed to said one direction in which said piston is biassed by said resilient means.

11. A valve as claimed in claim 10, wherein said resilient means comprises a spring (160) located in said chamber, said spring engaing, by a first end, an end wall of said chamber, and, by a second end, one face of said piston.

12. A valve as claimed in claim 10, wherein said resilient means comprises a spring (130) located in said bonnet passageway, said spring engaging, by a first end, an inwardly extending shoulder of said bonnet and, by a second end, a snap ring on said stem.

13. A valve as claimed in claim 10, 11 or 12, wherein said first and second connecting means each comprise a threaded section provided in a respective one of said ports.

14. A valve as claimed in any of claims 10 to 13, wherein said end cap (30) has a spigot extending normal to an end face (32) and having a threaded portion thereon; and a groove (38) is located on said spigot between said threaded portion and said end face (32).

15. A valve as claimed in claim 14, wherein a seal (170) is selectively positionable in said end cap groove (38').

16. A valve as claimed in any of claims 10 to 15, wherein said securing means comprises a snap ring (58) adapted to co-operate with a groove (56) located on an outer periphery of said bonnet (50) and with a shoulder located on an inner periphery of said end wall (14) for securing said housing body to said bonnet in a rotatable manner.

17. A valve as claimed in any of claims 10 to 16, wherein said piston has a circumferential groove (146) and a seal (144) is received in said groove, and wherein said ports are so positioned relative to each other that said piston seal (144) is always located between them regardless of the position of said piston (90).

18. A fluid operated valve actuator which can be used in confined areas and which can be readily adapted for use for either a normally-open valve or a normally-closed valve, said actuator comprising:

a housing body (10) comprising a side wall (12) and an apertured end wall (14) and defining a cavity therein;

an end cap (30) selectively securable to said housing side wall (12) in order to enclose said cavity and form a chamber;

a bonnet (50) having a longitudinal bore (74) extending between first and second ends, said first end of said bonnet (50) extending into said housing body (10) through said end wall (14);

a retaining means (58) for holding said body (10) on said bonnet (50);

a bonnet nut (70) for securing a second end of said bonnet (50) to an associated valve body;

a valve stem (80) which extends through said bonnet bore (74) and terminates in said housing body chamber; and

a piston (90) located in said chamber and secured to said valve stem (80);

said housing body (10) having a diameter which is no larger than the diameter of said bonnet nut (70).

19. A valve actuator as claimed in claim 18, further comprising:

a resilient means (130,160) for biassing said piston (90) to one end position, said resilient means being located in said chamber or in said bonnet bore; and

a means for introducing a fluid flow to one side of said piston (90) for selectively causing said piston to move linearly against the bias of said resilient means and shift said valve stem.

20. A valve actuator as claimed in claim 19, wherein said piston (90) divides said chamber into first and second chamber sections and wherein

a first seal (38') seals said first chamber section against communication with the environment; and

a second seal (86) seals said second chamber section against communication with the environment.

21. A valve actuator as claimed in claim 18, 19 or 20, wherein a port (24) extends through said side wall (12) of said housing body (10); and a port (41) extends through said end cap (30); and

a first connecting means connects an associated conduit to said housing so as to communicate with said chamber through the first port (24); and a second connecting means connects an associated conduit to said end cap (30) so as to communicate with said chamber through the second port (41).

FIG. I

FIG. 2